# EUROPÄISCHE PATENTSCHRIFT

(11) **EP 2 655 132 B1**
(45) Veröffentlichungstag und Bekanntmachung des Hinweises auf die Patenterteilung: **18.07.2018**
(21) Anmeldenummer: 11794186.4
(22) Anmeldetag: 13.12.2011
(51) Int. Cl.: B60Q 5/00

(54) **LENKRAD MIT EINER DURCH BIEGEN EINES EINSTÜCKIGEN KONTAKTBLECHSTREIFENS HERGESTELLTEN HUPENLEITERBAHN**
STEERING WHEEL HAVING HORN CONDUCTOR PATH PRODUCED BY BENDING A SINGLE PIECE CONTACT METAL STRIP
VOLANT DE DIRECTION COMPORTANT UNE PISTE CONDUCTRICE D'AVERTISSEUR FABRIQUÉE PAR PLIAGE D'UNE BANDE DE TÔLE DE CONTACT EN UNE SEULE PIÈCE

(30) Priorität: 20.12.2010 DE 102010055349
(43) Veröffentlichungstag der Anmeldung: 30.10.2013
(73) Patentinhaber: Autoliv Development AB, 447 83 Vårgårda (SE)
(72) Erfinder: HELLOT, Laurent, F-76220 La Feuillie (FR); ROULLE, Patrice, F-80140 Biencourt (FR); BRONNER, Jerome, F-76220 Gournay en Bray (FR)
(74) Vertreter: Feucker, Max Martin
(86) Internationale Anmeldenummer: PCT/EP2011/072595
(87) Internationale Veröffentlichungsnummer: WO 2012/084606

(56) Entgegenhaltungen:
- EP-A2- 1 270 332
- WO-A1-2006/076897
- DE-A1- 19 538 767
- DE-A1-102009 007 777
- DE-B3- 10 245 596
- US-A- 3 716 846
- US-A- 5 086 652

## Beschreibung

Die Erfindung betrifft ein Lenkrad für ein Kraftfahrzeug mit einem daran angeordneten Airbagmodul sowie mit an dem Lenkrad und/oder an dem Airbagmodul angeordneten Hupenleiterbahnen, die über Hupenkontakte in elektrischen Kontakt miteinander bringbar sind, um in einem Einbauzustand des Lenkrades in einem Kraftfahrzeug ein akustisches Hupsignal auszulösen, wobei die Hupenleiterbahnen von eine streifenförmige Fläche aufweisenden Kontaktblechen gebildet sind.

Ein Lenkrad mit den vorgenannten, gattungsgemäßen Merkmalen ist in der WO 2006/076897 A1 beschrieben. Dabei geht es darum, in ein Lenkrad Hupenleiterbahnen mit entsprechend angeordneten Hupenkontakten zu integrieren, die bei Druckausübung auf das Lenkrad in Richtung der Lenksäule in einen elektrischen Kontakt miteinander gebracht werden und dadurch ein akustisches Hupsignal auslösen. Lässt der Druck auf das Lenkrad nach, so bewegen sich die Hupenleiterbahnen aus ihrer Kontaktstellung heraus in eine Normalstellung, in der zwischen den Hupenleiterbahnen kein elektrischer Kontakt vorliegt. Die Hupenleiterbahnen können dabei jeweils am Lenkrad und am Airbagmodul angebracht sein. Bei dem bekannten Lenkrad bestehen die Hupenleiterbahnen aus eine vorgegebene Form aufweisenden streifenförmigen Kontaktblechen. Soweit die Hupenleiterbahnen beispielsweise dabei eine rahmenförmige Gestalt aufweisen, sind die die Hupenleiterbahnen ausbildenden Kontaktblechstreifen aus einem passenden Blechzuschnitt ausgestanzt, so dass eine einstückige Formgebung vorliegt. Es ist im Stand der Technik jedoch auch durch Benutzung bekannt, durch die Anpassung der Hupenleiterbahnen an das Airbagmodul beziehungsweise die Lenkradstruktur bedingte kompliziertere Formgebungen für die Hupenleiterbahnen, durch ein Zusammensetzen mehrerer Blechstreifenabschnitte herzustellen, die dann in ihren Kreuzungs- bzw. Anschlusspunkten einander überlagern und beispielsweise durch die Anbringung von beispielsweise Schraub- oder Nietverbindungen miteinander verbunden werden.

Mit einer derartigen Ausgestaltung der Hupenleiterbahnen ist der Nachteil verbunden, dass bei der Herstellung der Hupenleiterbahnen durch Ausstanzen aus einem flächigen Kontaktblech als Ausgangsmaterial erhebliche Abfallmengen anfallen. Soweit zur Vermeidung entsprechender Stanzabfälle die Hupenleiterbahnen aus einzelnen Kontaktblechstreifen zusammengesetzt sein können, ist der fertigungsbedingte Aufwand für das Ausstanzen und das anschließende Zusammenfügen der einzelnen Blechstreifenabschnitte zu einer Hupenleiterbahn mit der vorgegebenen Gestalt entsprechend groß.

Aus der DE 195 38 767 A1 ist ein Lenkstockschalter mit einer Schalteinrichtung am Ende des Schalthebels bekannt, wobei der Schalthebel aus zwei Teilen besteht, zwischen denen eine flexible Leiterfolie geführt ist. Soweit die Leiterfolie als längsgestreckter Leiter hergestellt sein beziehungsweise vorliegen kann, ist in der DE 195 38 767 A1 vorgeschlagen, die Leiterfolie beispielsweise an zwei Stellen derart zu falten, dass jeweils zwei Bereiche des Folienstreifens im Bereich der Faltung aufeinander zu liegen kommen.

In der DE 10 2009 007 777 A1 ist eine Lenkradbaugruppe für ein Kraftfahrzeug beschrieben, bei der ein Abschnitt eines Modulträgers bei Aufbringen eines entsprechenden Drucks scharnierartig deformierbar in Richtung auf ein weiteres Bauteil durchfedern soll. Hierzu sind an dem Modulträger durch eingebrachte Aussparungen ausgebildete Materialschwächungen angebracht, die einen deformierbaren Abschnitt des Modulträgers erzeugen.

Der Erfindung liegt daher die Aufgabe zugrunde, ein Lenkrad mit den gattungsgemäßen Merkmalen so auszubilden, dass der Fertigungsaufwand für die Herstellung einer Hupenleiterbahn reduziert ist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass eine einzelne Hupenleiterbahn von einem einstückigen Blechstreifen gebildet ist, der in einen eine vorgegebene Form der Hupenleiterbahn ausbildenden Verlauf gebogen ist, indem der als Ausgangsmaterial langgestreckte Blechstreifen um wenigstens eine im Winkel zu seiner Längsachse verlaufende Biegeachse in einen richtungsändernden Verlauf gebogen ist, bei welchem die beiderseits der Biegeachse innenseitig der Biegerichtung gelegenen Flächenbereiche des Blechstreifens aufeinander zu liegen kommen. Mit der Erfindung ist der Vorteil verbunden, dass als Ausgangsmaterial für die Herstellung der Hupenleiterbahnen lediglich Blechstreifen mit einer ausreichenden Länge vorzuhalten sind, die durch gegebenenfalls mehrfaches Biegen um zugeordnete Biegeachsen in die gewünschte Gestalt gebracht werden beziehungsweise gebracht sind, wobei durch das Vorsehen entsprechender mehrerer Biegestellen fast beliebige Formgebungen für eine Hupenleiterbahn zu erreichen sind. Bei der Herstellung der Blechstreifen fällt kein ins Gewicht fallender Abfall an, und auch bei der Formgebung der eine einstückige Gestalt aufweisenden Hupenleiterbahnen entsteht über deren Biegen hinaus kein zusätzlicher Fertigungsaufwand.

Zur Herstellung von auch komplizierte Formgebungen aufweisenden Hupenleiterbahnen kann vorgesehen sein, dass ein einstückiger Blechstreifen ausreichender Länge zur Herstellung einer Hupenleiterbahn mehrere über seine Länge verteilte angeordnete, jeweils um eine zugeordnete Biegeachse abknickende Abschnitte aufweist,

Nach einem Ausführungsbeispiel der Erfindung ist vorgesehen, dass durch eine unterschiedliche Ausrichtung der Biegeachsen zur Längsachse des Blechstreifens verschiedene Verläufe des die Hupenleiterbahn ausbildenden Blechstreifens mit jeweils winklig zueinander ausgerichteten Abschnitten einstellbar sind.

Beispielsweise kann vorgesehen, dass zur Herstellung eines rechtwinklig zueinander abknickenden Verlaufs von zwei Abschnitten des einstücken Blechstreifens die Biegeachse einen Winkel von 45° zur Längsachse des langgestreckten Blechstreifens aufweist.

Nach einem Ausführungsbeispiel der Erfindung kann vorgesehen sein, dass im Bereich der Biegeachse in dem Blechstreifen eine die Biegeachse durchsetzende Durchbrechung angebracht ist. Aufgrund der entsprechend vorgesehenen Materialschwächung im Bereich der Biegeachse ist das Biegen des Blechstreifens in die gewünschte Form erleichtert.

In der Zeichnung ist ein Ausführungsbeispiel der Erfindung wiedergegeben, welches nachstehend beschrieben ist. Es zeigen:
- Fig. 1: ein Airbagmodul mit einer auf dessen Oberseite angeordneten Hupenleiterbahn in einer schematischen Perspektivdarstellung,
- Fig. 2: einen einstückigen langgestreckten Blechstreifen als Ausgangsmaterial für die Herstellung einer Hupenleiterbahn in einer Perspektivdarstellung,
- Fig. 3: den Blechstreifen gemäß Figur 2 nach einem zweifachen Biegevorgang.

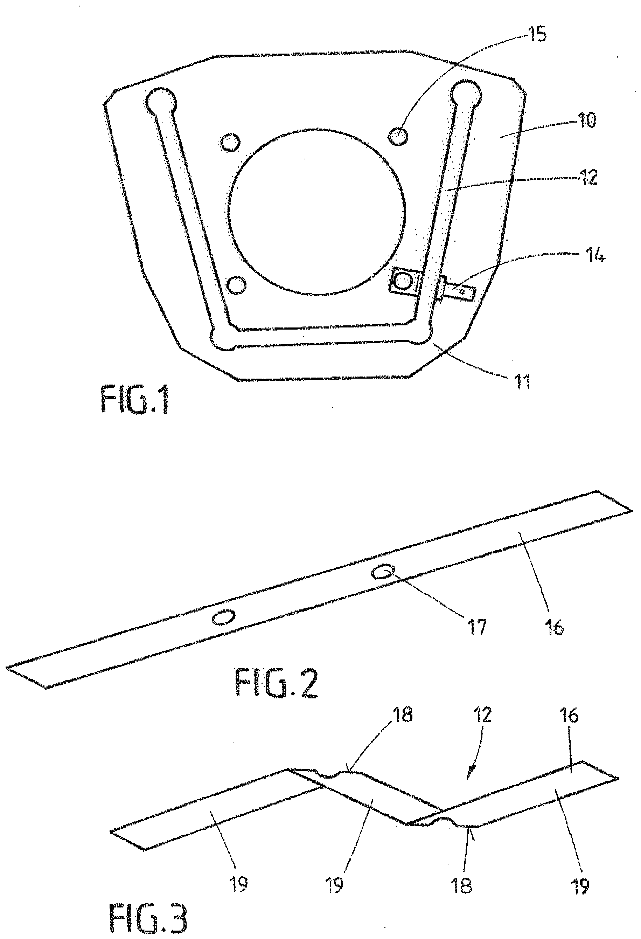

Wie sich zunächst aus Figur 1 ergibt, ist auf der Oberfläche 11 eines Gehäuses eines Airbagmoduls 10 eine Hupenleiterbahn 12 angebracht. Das Airbagmodul 10 weist Durchtrittslöcher 12 zur Aufnahme von Stehbolzen zur Befestigung des Gasgenerators an dem Airbagmodul auf. Die in der Darstellung der Figur 1 nur schematisch und nicht erfindungsgemäß ausgebildete Hupenleiterbahn 12 besteht aus einem einstückigen Blechstreifen, der drei rahmenartig gegeneinander abgeknickte Abschnitte aufweist. In die Oberfläche 11 des Airbagmoduls 10 ist eine Erdungsbahn 14 eingelassen, um einen Erdungskontakt für die Hupenleiterbahn 12 herzustellen.

Aus den Figuren 2 und 3 ergibt sich nun die erfindungsgemäße Ausbildung der Hupenleiterbahn 12. Hierzu ist der aus Figur 2 ersichtliche einstückige und langgestreckt vorliegende Blechstreifen 16 in die aus Figur 3 ersichtliche Form mit drei jeweils gegeneinander abgeknickten Abschnitten 19 gebogen. Das Biegen des Blechstreifens 16 in die jeweils rechtwinklig zueinander liegenden Abschnitte 19 erfolgte durch Biegen des Blechstreifens 16 um im Winkel von 45° zur Längsachse des Blechstreifens 16 verlaufende Biegeachsen 18. Bei diesem Biegevorgang kommen jeweils die beiderseits der Biegeachse 18 innenseitig der Biegerichtung gelegenen Flächenbereiche des Blechstreifens 16 aufeinander zu liegen. Um das Biegen des Blechstreifens 16 zu vereinfachen, sind die Biegeachsen 18 jeweils durchsetzende Durchbrechungen 17 in dem Blechstreifen 16 vorgesehen. Die Erfindung ist dabei nicht auf die aus Figur 3 ersichtliche Formgebung für eine Hupenleiterbahn 12 beschränkt; vielmehr sind auch andere Konfigurationen einer Hupenleiterbahn möglich.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Lenkrad für ein Kraftfahrzeug mit einem daran angeordneten Airbagmodul sowie mit an dem Lenkrad und/oder an dem Airbagmodul angeordneten Hupenleiterbahnen, die über Hupenkontakte in elektrischen Kontakt miteinander bringbar sind, um in einem Einbauzustand des Lenkrades in einem Kraftfahrzeug ein akustisches Hupsignal auszulösen, wobei die Hupenleiterbahnen von eine streifenförmige Fläche aufweisenden Kontaktblechen gebildet sind, **dadurch gekennzeichnet, dass** eine einzelne Hupenleiterbahn (12) von einem einstückigen Blechstreifen (16) gebildet ist, der in einen eine vorgegebene Form der Hupenleiterbahn (12) ausbildenden Verlauf gebogen ist, indem der als Ausgangsmaterial langgestreckte Blechstreifen (16) um wenigstens eine im Winkel zu seiner Längsachse verlaufende Biegeachse (18) in einen richtungsändernden Verlauf gebogen ist, bei welchem die beiderseits der Biegeachse (18) innenseitig der Biegerichtung gelegenen Flächenbereiche des Blechstreifens (16) aufeinander zu liegen kommen.

2. Lenkrad nach Anspruch 1, **dadurch gekennzeichnet, dass** ein einstückiger Blechstreifen (16) ausreichender Länge zur Herstellung einer Hupenleiterbahn (12) mehrere über seine Länge verteilte angeordnete, jeweils um eine zugeordnete Biegeachse (18) abknickende Abschnitte (19) aufweist.

3. Lenkrad nach Anspruch 1 oder 2, **dadurch gekennzeichnet, dass** durch eine unterschiedliche Ausrichtung der Biegeachsen (18) zur Längsachse des Blechstreifens (16) Verschiedene Verläufe des die Hupenleiterbahn (12) ausbildenden Blechstreifens (16) mit jeweils winklig zueinander ausgerichteten Abschnitte (19) einstellbar sind.

4. Lenkrad nach einem der Ansprüche 1 bis 3, **dadurch gekennzeichnet, dass** zur Herstellung eines rechtwinklig zueinander abknickenden Verlaufs von zwei Abschnitten (19) des einstückigen Blechstreifens (16) die Biegeachse (18) im Winkel von 45° zur Längsachse des langgestreckten Blechstreifens (16) angeordnet ist.

5. Lenkrad nach einem der Ansprüche 1 bis 4, **dadurch gekennzeichnet, dass** im Bereich der Biegeachse (18) in dem Blechstreifen (16) eine die Biegeachse (18) durchsetzende Durchbrechung (17) angebracht ist.

## Claims

1. Steering wheel for a motor vehicle with an airbag module arranged thereon and with horn conductor paths arranged on the steering wheel and/or on the airbag module that can be brought into electrical contact with each other via horn contacts, in order to initiate an acoustic horn signal in an installed state of the steering wheel in a motor vehicle, wherein the horn conductor paths are formed by contact plates comprising a strip-shaped surface, **characterised by** that a single horn conductor path (12) is formed by a one-piece sheet metal strip (16), which is bent in a curve forming a prescribed shape of the horn conductor path (12), in that the sheet metal strip (16), which is elongated as starting material, is bent about at least one bending axis (18) running at an angle to its longitudinal axis in a direction-changing curve, in which the surface areas of the sheet metal strip (16) on the inner side of the bending direction on both sides of the bending axis (18) come into contact with each other.

2. Steering wheel according to claim 1, **characterised by** that a one-piece sheet metal strip (16) of sufficient length to produce a horn conductor path (12) has a plurality of sections (19) arranged distributed over its length and each bending about an associated bending axis (18).

3. Steering wheel according to claim 1 or 2, **characterised by** that due to a different orientation of the bending axes (18) to the longitudinal axis of the sheet metal strip (16), different curves of the sheet metal strip (16) forming the horn conductor path (12) with sections (19) respectively oriented at an angle to each other can be set.

4. Steering wheel according to any one of claims 1 to 3, **characterised by** that to produce a curve of two sections (19) of the one-piece sheet metal strip (16) bending at right angles to one another, the bending axis (18) is disposed at an angle of 45° to the longitudinal axis of the elongated sheet metal strip (16).

5. Steering wheel according to any one of claims 1 to 4, **characterised by** that a break (17) passing through the bending axis (18) is made in the region of the bending axis (18) in the sheet metal strip (16).

## Revendications

1. Volant de direction, destiné à un véhicule automobile, dans lequel est agencé un module de coussin gonflable et comportant des pistes conductrices d'avertisseur sonore agencées sur le volant et/ou sur le module de coussin gonflable, qui sont susceptibles d'être mises en contact électrique les unes avec les autres par le biais de contacts pour avertisseur sonore afin de déclencher un signal acoustique d'avertisseur sonore une fois le volant monté dans un véhicule automobile, lesdites pistes conductrices d'avertisseur sonore étant formées par des lamelles de contact présentant une surface en forme de bande, **caractérisé en ce qu'**une piste conductrice d'avertisseur sonore (12) distincte est formée par une bande métallique (16) unitaire pliée selon une configuration permettant de donner une forme prédéterminée à la piste conductrice d'avertisseur sonore (12), en ce sens que la bande métallique (16) allongée servant de matériau de départ est pliée, pour former une configuration changeant de directions, sur un axe de pliage (18) orienté angulairement par rapport à son axe longitudinal, dans laquelle configuration les zones superficielles de la bande métallique (16) situées de chaque côté de l'axe de pliage (18) sur l'intérieur du sens de pliage viennent à se superposer.

2. Volant selon la revendication 1, **caractérisé en ce qu'**une bande métallique (16) unitaire de longueur suffisante pour produire une piste conductrice d'avertisseur sonore (12) présente plusieurs sections (19), réparties sur sa longueur, qui présentent un désaxement selon un axe de pliage (18) associé.

3. Volant selon la revendication 1 ou 2, **caractérisé en ce qu'**une orientation différente des axes de pliage (18) par rapport à l'axe longitudinal de la bande métallique (16) permet de créer différentes configurations de la bande métallique (16) constituant la piste conductrice d'avertisseur sonore (12), avec des sections (19) orientées coudées les unes par rapport aux autres.

4. Volant de direction selon l'une des revendications 1 à 3, **caractérisé en ce que,** pour produire une configuration désaxée à angle droit entre deux sections (19) de la bande métallique (16) unitaire, l'axe de pliage (18) est établi à 45° par rapport à l'axe longitudinal de la bande métallique (16) allongée.

5. Volant de direction selon l'une des revendications 1 à 4, **caractérisé en ce qu'**une perforation (17) traversant l'axe de pliage (18) est pratiquée dans la bande métallique (16) dans la zone de l'axe de pliage (18).
